# EUROPEAN PATENT SPECIFICATION

(11) **EP 4 403 429 B1**
(45) Date of publication and mention of the grant of the patent: **30.04.2025**
(21) Application number: 23152898.5
(22) Date of filing: 23.01.2023
(51) Int. Cl.: B60W 30/09, B60W 30/095, B60W 50/14

(54) **METHOD FOR AVOIDING A REAR-END COLLISION BETWEEN A FIRST VEHICLE AND A SECOND VEHICLE, DATA PROCESSING APPARATUS, COMPUTER PROGRAM, AND COMPUTER-READABLE STORAGE MEDIUM**
VERFAHREN ZUR VERMEIDUNG EINER HECKKOLLISION ZWISCHEN EINEM ERSTEN FAHRZEUG UND EINEM ZWEITEN FAHRZEUG, DATENVERARBEITUNGSVORRICHTUNG, COMPUTERPROGRAMM UND COMPUTERLESBARES SPEICHERMEDIUM
PROCÉDÉ POUR ÉVITER UNE COLLISION PAR L'ARRIÈRE ENTRE UN PREMIER VÉHICULE ET UN SECOND VÉHICULE, APPAREIL DE TRAITEMENT DE DONNÉES, PROGRAMME INFORMATIQUE ET SUPPORT DE STOCKAGE LISIBLE PAR ORDINATEUR

(43) Date of publication of application: 24.07.2024
(73) Proprietor: Volvo Car Corporation, 405 31 Göteborg (SE)
(72) Inventor: PEREZ BARRERA, Oswaldo, 405 31 Göteborg (SE); MORALES, Gerardo, 405 31 Göteborg (SE)
(74) Representative: Maiwald GmbH

(56) References cited:
- US-A1- 2018 292 836
- US-A1- 2020 039 508
- US-A1- 2020 122 773
- US-A1- 2021 387 635

## Description

The present invention relates to a method for avoiding a rear-end collision between a first vehicle and a second vehicle. The second vehicle is located behind the first vehicle along a travelling direction of the first vehicle and travels along the same travelling direction.

The present invention further is directed to a data processing apparatus, a computer program, and a computer-readable storage medium.

Rear-end collisions are a frequent type of accident. Such an accident may occur if the first vehicle is decelerating and the second vehicle is not decelerating early enough and/or strong enough. This may be due to a distance between the first vehicle and the second vehicle being too small and/or a driver of the second vehicle being inattentive.

In order to avoid rear-end collisions, it is common that the first vehicle switches on the hazard lights, when braking abruptly or stopping abruptly. This makes it easier for a driver of the second vehicle to notice that the first vehicle is decelerating.

US 2020/039508 A1 teaches a driving assistance apparatus including a processing circuit. The processing circuitry identifies a driver's driving state in a following vehicle. The processing circuitry controls the autonomous driving of a subject vehicle based on the basis of the identified driving state.

US 2021/387653 A1 discloses a vehicle peripheral monitoring apparatus. The apparatus recognizes an autonomous driving level of another vehicle present around a subject vehicle. Based on the recognized autonomous driving level of the other vehicle, it is determined whether or not the driver condition of said other vehicle is acceptable. A warning is notified to a driver of the subject vehicle when the driver condition of said other vehicle is determined to be not acceptable.

US 2020/122773 A1 shows a collision avoidance system including a sensor system and a control system of a vehicle. The control system receives sensor data and evaluates a risk level of a potential collision between a subject vehicle and another vehicle. The control system controls the subject vehicle in an autonomous driving mode based on the evaluation of the sensor data.

US 2018/292836 A1 describes a system for operating an automated vehicle in accordance with operation-rules that are based on an automation-level of an other-vehicle including an automation-detector and a controller. The automation-detector conveys an automation-level indicated by an other-vehicle proximate to a host-vehicle. The controller operates the host-vehicle in accordance with an operation-rule that is selected based on the automation-level of the other-vehicle.

It is an objective of the present invention to further improve methods for avoiding rear-end collisions between the first vehicle and the second vehicle. This means that the reliability of avoiding the rear-end collision shall be increased.

The problem is at least partially solved or alleviated by the subject matter of the independent claims of the present invention, wherein further examples are incorporated in the dependent claims.

According to a first aspect, there is provided a method for avoiding a rear-end collision between a first vehicle and a second vehicle. The second vehicle is located behind the first vehicle along a travelling direction of the first vehicle and travels along the same travelling direction. The method comprises:
- receiving a detection result comprising a representation of the second vehicle,
- determining that the second vehicle is driving in a manual driving mode,
- determining a collision risk between the second vehicle and the first vehicle, and
- triggering a collision mitigation maneuver of the first vehicle, if a collision risk has been determined.

The detection result comprising a representation of the second vehicle serves two purposes. The first purpose is to know whether a second vehicle is located behind the first vehicle. In a case in which no second vehicle is located behind the first vehicle, the method is abandoned. The second purpose is to provide a basis for the determination whether the second vehicle is driving in a manual driving mode and for the determination of a collision risk. The detection result is for example an optical image which has been captured by a camera unit of the first vehicle. Alternatively, the detection result may be a detection result of a radar unit of the first vehicle, a lidar unit of the first vehicle or an ultrasound unit of the first vehicle. Independent from the specific technology which is used in order to generate the detection result, the purposes mentioned above may be reliably fulfilled. It is, thus, ensured that the present method is only executed if the second vehicle is driving in a manual driving mode by determining that the second vehicle is driving in a manual driving mode. It is noted that the second vehicle may be driving in a manual driving mode while having the capability of driving in an autonomous driving mode which is not activated. If the second vehicle is driving in an autonomous driving mode, the present method is abandoned, since in this case other means to avoid a rear-end collision between the first vehicle and the second vehicle may be applied. The collision risk is determined based on the detection result. In this context, the collision risk is to be understood as a binary indicator. This means that either a collision risk is found to be existing or not. Determining the collision risk based on the detection result may be performed in an automatic manner, e.g. using computer vision. Thus, the collision risk is determined in a quick and reliable manner. In this context, the collision risk may be determined for a current driving situation only which comprises a planned route. Thus, for example no collision risk may be determined in case of a planned turn while at the same time a distance between the first vehicle and the second vehicle is very small. Triggering a collision mitigation maneuver based on the above determinations strongly reduces the probability of a rear-end collision. More generally speaking, road safety is enhanced for the first vehicle, the second vehicle and other traffic participants.

The method according to the present invention may be executed continuously or periodically during operation of the first vehicle. Alternatively, the execution of the method according to the present invention may be triggered by one or several specific driving events occurring in connection with the first vehicle. An example of such a driving event is that the first vehicle is decelerating, e.g. following a breaking maneuver. The deceleration can be due to a planned or effective turning maneuver, a planned or effective pull over maneuver, a planned or effective lane change, a planned or effective obstacle avoidance maneuver, a planned or effective deceleration following the detection of a traffic light or road sign or any other driving event requiring deceleration of the first vehicle.

In the present context, a collision mitigation maneuver of the first vehicle is to be understood as any driving maneuver of the first vehicle which is suitable for reducing a collision probability between the first vehicle and the second vehicle. Exemplary collision mitigation maneuvers include performing a lane change, accelerating, turning, canceling a planned turn and continuing to drive straight ahead.

It is noted, that also two or more collision mitigation maneuvers may be triggered when executing the method of the present invention. In other words, a combination of collision mitigation maneuvers may be triggered.

The method of the present invention may be executed on or by the first vehicle. This means that the method of the present invention is executed by a component of the first vehicle. Alternatively, the method of the present invention may also be executed on a component which is remote from the first vehicle but associated to the first vehicle.

The first vehicle may be a vehicle being operated in a fully or partially autonomous driving mode. In such a vehicle, the collision mitigation maneuver may be triggered automatically. The first vehicle may as well be operated in a manual driving mode. In such a vehicle, the collision mitigation maneuver needs to be triggered by triggering the human driver to perform the collision mitigation maneuver.

In an example, determining that the second vehicle is driving in a manual driving mode comprises determining whether an occupant is located in the second vehicle. This determination may be based on the received detection result. If no occupant is detected in the second vehicle, this is a strong indicator that the second vehicle is driving in an autonomous driving mode. In this case the method is abandoned. In a case in which an occupant is detected in the second vehicle, it is possible that the second vehicle is driving in an autonomous driving mode or in a manual driving mode. In this case further investigations are necessary in order to determined that the vehicle is driving in a manual driving mode.

In an example, the method further comprises determining a position of the occupant relative to a steering wheel or a standard driver position of the second vehicle. Also this determination may be based on the received detection result. If an occupant is determined who is sitting in a standard driving position or next to a steering wheel, one may derive that the second vehicle is driving in a manual driving mode. Otherwise, i.e. if no occupant is determined to be sitting in a standard driving position or next to a steering wheel, one may derive that the second vehicle is driving in an autonomous driving mode. As has been mentioned before, the latter case, the method is abandoned. Altogether the determination that the second vehicle is operated in a manual driving mode is quick and reliable.

In an example, determining that the second vehicle is driving in a manual driving mode comprises providing a driving mode status request to the second vehicle. In simplified words, in this example the second vehicle is asked whether it is driving in an autonomous driving mode or in a manual driving mode. It may happen that the second vehicle is not able to answer such a driving mode status request. In this case, a manual driving mode may be assumed. Otherwise, i.e. if the second vehicle is able to answer such a driving mode status request, a reliable determination whether the second vehicle is driving in a manual driving mode or in an autonomous driving mode is available.

In an example, the method further comprises choosing the triggered collision mitigation maneuver out of a plurality of available collision mitigation maneuvers based on a planned travelling route and/or based on a current traffic situation. In this context, the present traveling route relates to the trajectory along which the first vehicle plans to travel. A current traffic situation incorporates other traffic participants than the first vehicle and the second vehicle, especially other traffic participants in proximity to the first vehicle, e.g. in front of the first vehicle, to the left of the first vehicle or to the right of the first vehicle. Obviously, collisions of the first vehicle with other traffic participants need to be avoided when performing the collision mitigation maneuver. These circumstances may limit the choice of an appropriate collision mitigation maneuver. Examples of collision mitigation maneuvers have been mentioned before.

In an example, the method further comprises determining whether the second vehicle is decelerating based on the received detection result. This may for example be done by detecting an evolution of a distance between the first vehicle and the second vehicle over time while at the same time considering an evolution of the speed of the first vehicle over time. Additionally or alternatively, a size of the representation of the second vehicle in the detection result may be evaluated in order to determine whether the second vehicle is decelerating. The method may be abandoned if the second vehicle is found to be decelerating. In this context, the fact that the second vehicle is decelerating is interpreted in that an autonomous or human driver of the second vehicle is aware of the presence of the first vehicle and is avoiding a rear-end collision between the first that the second vehicle.

In an example, determining a collision risk comprises determining a distance between the first vehicle and the second vehicle and comparing the distance to an estimated safe braking distance. In this context, also an evolution of the distance between the first vehicle and the second vehicle over time may be considered. The estimated safe braking distance is a distance that is needed by the second vehicle to break until standstill. This distance is a function of a speed of the second vehicle.

In an example, determining a collision risk comprises determining an estimated time to collision between the first vehicle and the second vehicle. The estimated time to collision is a function of a speed difference between a speed of the first vehicle and the speed of the second vehicle and a geometric distance between the first vehicle and the second vehicle. The estimated time to collision may be compared to a fixed or non-fixed time to collision threshold in order to determine a collision risk. In this context, also an evolution of the time to collision over time may be considered. A collision risk may, thus be determined in a reliable and precise manner.

In an example, the method further comprises receiving or determining a vehicle type information and/or a vehicle model information describing the second vehicle and estimating the safe braking distance and/or the time to collision threshold based on the vehicle type information and/or the vehicle model information. This example uses a vehicle type specific or a vehicle model specific braking performance information. In other words, if a vehicle type and/or a vehicle model is known, a braking performance indicator may be received from a database being located remote from the first vehicle. Alternatively, a braking performance indicator for different types of vehicles and/or different vehicle models may be stored on the component executing the method. The vehicle model information may comprise a manufacturer of the vehicle and a specific model identification. The braking performance indicator for example comprises average braking distances as a function of a starting speed or for a specific range of starting speeds. Thus, the safe braking distance and/or the time to collision threshold may be precisely determined.

In an example, the method further comprises determining a collision risk forecast if no collision risk has been determined. The collision risk forecast comprises an information whether a collision risk is expected to occur in the future or not. In case a collision risk is determined based on a time to collision, the collision risk forecast may relate to a time difference between a current time to collision and a time to collision threshold. In case the collision risk is determined using a safe braking distance, the collision risk forecast may relate to a difference between a current distance and the safe braking distance. Consequently, a reliable forecast of a collision risk potentially occurring in the future may be provided.

In an example, the method further comprises determining a driver distraction status. The driver distraction status relates to an information whether the driver of the second vehicle is distracted or not. If the driver of the second vehicle is distracted, there is a risk that the driver does not perceive the first vehicle in a timely manner such that a rear-end collision cannot be avoided by the second vehicle alone. Consequently, an appropriate reaction to a distracted driver may be triggering a collision mitigation maneuver of the first vehicle. This increases road safety.

In an example, determining a driver distraction status comprises determining a driver head pose and/or a driver pupil position. The driver may be considered to be distracted if the head pose is such that the driver's face is not oriented towards the front of the second vehicle. Alternatively or additionally, the driver may be considered to be distracted if his or her pupils may not be detected. As has been mentioned before, in case the driver of the second vehicle is distracted, a rear-end collision between the first vehicle and the second vehicle is more likely than in a case in which the driver is not distracted. Consequently, road safety is enhanced.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present invention. Using such a data processing apparatus, the collision risk is determined in a quick and reliable manner. Triggering a collision mitigation maneuver strongly reduces the probability of a rear-end collisions. More generally speaking, road safety is enhanced for the first vehicle, the second vehicle and other traffic participants.

According to a third aspect, there is provided a computer program comprising instructions which, when the computer program is executed by a computer, cause the computer to carry out the method of the present invention. Using the computer program, the collision risk is determined in a quick and reliable manner. Triggering a collision mitigation maneuver strongly reduces the probability of a rear-end collisions. More generally speaking, road safety is enhanced for the first vehicle, the second vehicle and other traffic participants.

According to a fourth aspect, there is provided a computer-readable storage medium comprising instructions which, when executed by a computer, cause the computer to carry out the method of the present invention. Using the computer-readable storage medium, the collision risk is determined in a quick and reliable manner. Triggering a collision mitigation maneuver strongly reduces the probability of a rear-end collisions. More generally speaking, road safety is enhanced for the first vehicle, the second vehicle and other traffic participants.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings.

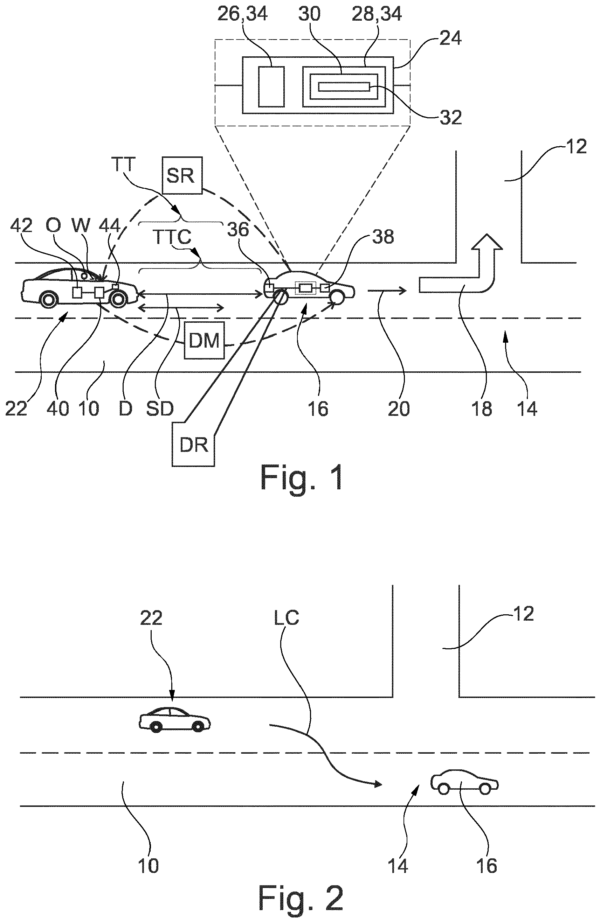

- Figure 1: shows a traffic situation comprising a first vehicle and a second vehicle, wherein the second vehicle is located behind the first vehicle along a travelling direction of the first vehicle, wherein the first vehicle comprises a data processing apparatus according to the present invention with a computer-readable storage medium according to the present invention and a computer program according to the present invention, wherein on the data processing apparatus, a method according to the present invention is performed, and
- Figure 2: shows a further traffic situation which differs from the traffic situation of Figure 1 in that the first vehicle has performed a collision mitigation maneuver.

The Figures are merely schematic representations and serve only to illustrate examples of the invention. Identical or equivalent elements are in principle provided with the same reference signs.

Figure 1 shows a traffic situation. The traffic situation comprises a first road 10 and the second road 12 which meet at an intersection 14.

Moreover, the traffic situation comprises a first vehicle 16 which is traveling along a planned route being indicated by arrow 18. The associated traveling direction is indicated by arrow 20. This means that in the present example, the first vehicle 16 is planning to turn into the second road 12.

It is noted that the planned route 18 of the first vehicle 16 is an example only. In another example, the first vehicle 16 could be traveling along a substantially straight planned route.

The traffic situation also comprises a second vehicle 22.

The second vehicle 22 is located behind the first vehicle 16 along the traveling direction 20 of the first vehicle 16. Moreover, the second vehicle 22 is travelling into the same direction as the first vehicle 16, i.e. along travelling direction 20.

In the present example, the first vehicle 16 is configured to be able to at least be operated in an at least partially autonomous driving mode.

In this context, the first vehicle 16 comprises a data processing apparatus 24.

The data processing apparatus 24 has a data processing unit 26 and a data storage unit 28. The data storage unit 28 comprises a computer-readable storage medium 30.

On the computer-readable storage medium 30, there is provided a computer program 32.

Both the computer-readable storage medium 30 and the computer program 32 comprises instructions which, when executed by the data processing unit 26 or, more generally speaking, a computer, cause the data processing unit 26 or the computer to carry out a method for avoiding a rear-end collision between a first vehicle and a second vehicle.

Consequently, the data processing unit 26 and the data storage unit 28 form means 34 for carrying out a method for avoiding a rear-end collision between the first vehicle and the second vehicle.

Beyond that, the first vehicle 16 comprises a rearward facing camera unit 36. The camera unit 36 is communicatively connected to the data processing apparatus 24 such that a detection result DR or image being generated by the camera unit 36 may be provided to the data processing apparatus 24.

In the present traffic situation, the first vehicle 16 and the second vehicle 22 are arranged such that the detection result DR of the camera unit 36 comprises a representation of the second vehicle 22.

In the following, the method for avoiding a rear-end collision between the first vehicle and the second vehicle will be explained.

In a first step S1, the detection result DR comprising a representation of the second vehicle 22 is received at the data processing apparatus 24. In the present example, the detection result DR is an image being provided by the camera unit 36.

In a subsequent second step S2, it is determined whether the second vehicle 22 is decelerating. This is done based on the detection result DR. In the present example, the representation of the second vehicle 22 is detected in the detection result DR using computer vision. Based thereon, a size of the representation of the second vehicle 22 is determined. If different detection results DR are received at different points in time, a deceleration of the second vehicle 22 may be determined based on a comparison of the size of the representation of the second vehicle 22 in these different detection results DR. Additionally, the speed of the first vehicle 16 at these different points in time may be considered.

In a case in which the second vehicle 22 is found to be decelerating, the method is abandoned since in such a case the risk for a rear-end collision is considered to be very low.

In the opposite case, i.e. if the second vehicle 22 is not found to be decelerating, the method is continued.

In a subsequent third step S3, it is determined that the second vehicle 22 is driving in a manual driving mode. The underlying rationale is that in a case in which the second vehicle 22 is driving in an autonomous driving mode, the present method does not need to be performed since then other measures can be used in order to avoid a rear-end collision. Thus, the method is only continued if the second vehicle 22 is found to be driving in a manual driving mode. Otherwise, the method is abandoned.

In the present example, the determination whether the second vehicle 22 is driving in a manual driving mode is done based on the detection result DR.

A first sub-step comprises determining whether an occupant O is located in the second vehicle 22. To this end, a computer vision technique is applied on the detection result DR.

If no occupant O is detected in the second vehicle 22, the method is abandoned since then the second vehicle 22 is considered to be driving in an autonomous driving mode. Otherwise, the method is continued and a location of each of the detected occupants O of the second vehicle 22 is determined.

In a second sub-step, the determined location is compared to at least one of a standard driver position and a position of a steering wheel W.

In a case in which an occupant O is found to be located in a standard driver position or adjacent to a steering wheel W, the method infers that the second vehicle 22 is driving in a manual driving mode. Then, the method is continued.

Determining whether the second vehicle 22 is driving in a manual driving mode may also be performed according to an alternative. In this alternative, a driving mode status request SR is provided to the second vehicle 22. This driving mode status request SR may be sent out by the data processing apparatus 24 of the first vehicle 16 and/or a communication unit 38 being communicatively connected to the data processing apparatus 24. In this alternative also the second vehicle 22 needs to have a communication unit 40 which is configured to communicate with the communication unit 38 and/or the data processing apparatus 24 of the first vehicle 16. Beyond that, the second vehicle 22 needs to comprise a driving mode status determination unit 42. The driving mode status determination unit 42 needs to be communicatively connected to the communication unit 40 of the second vehicle 22.

Consequently, the second vehicle 22 or more precisely the driving mode status determination unit 42 together with the communication unit 40 can answer the driving mode status request SR of the first vehicle 16 by providing an indication of the driving mode DM that is currently used by the second vehicle 22.

Also in using this alternative, the method is only continued if the second vehicle 22 is driving in a manual driving mode and, thus, answers the driving mode status request SR by an appropriate response.

Thereafter, in a fourth step S4, a collision risk between the second vehicle 22 and the first vehicle 16 is determined. As has been explained before, the collision risk is seen as a binary indicator. This means that either a collision risk is present or absent.

In a first alternative, the collision risk is determined in a length or distance domain.

This means that determining the collision risk comprises determining a distance D between the first vehicle 16 and the second vehicle 22. This distance D may be determined based on the detection result DR. To this end, detection results DR having been generated at different points in time may be compared with respect to a size of the representation of the second vehicle 22.

Then, the determined distance D is compared to an estimated safe braking distance SD.

If the determined distance D is bigger than the estimated safe braking distance D, the method infers that no collision risk is present. Otherwise, i.e. if the determined distance D equals to the estimated safe braking distance SD or is smaller than the estimated safe braking distance SD, the method infers that a collision risk exists.

In this context, the estimated safe braking distance SD may be determined based on the received detection result DR.

In more detail, using computer vision, a vehicle type information and/or a vehicle model information may be derived from the received detection result DR.

The vehicle type information may describe to which category of the vehicle the second vehicle 22 belongs, e.g. car, truck, bus or motorcycle.

The vehicle model information relates to a manufacturer of the vehicle and an identification of the model of this specific manufacturer.

In order to determine the vehicle type information and/or the vehicle model information, the representation of the second vehicle 22 in the detection result DR may be compared to a number of images showing vehicles of a known type and/or of a known manufacturer and known model identification. The vehicle type information and/or the vehicle model information may be determined by a similarity assessment, e.g. by using the known type and/or manufacturer and model identification being associated with the image which has the highest similarity to the detection result DR. The number of images may be provided on the data storage unit 28 of the data processing apparatus 24. Alternatively, these images may be provided remote from the first vehicle 16. The number of images are for example provided in the form of a database.

In a case in which the second vehicle 22 comprises a communication unit 40 and a storage unit 44 on which information characterizing the second vehicle 22 is stored, e.g. the vehicle type information and/or the vehicle model information, the vehicle type information and/or the vehicle model information may as well be determined by sending a corresponding request to the second vehicle and receiving a corresponding answer.

In simplified words, the vehicle type information and/or the vehicle model information may be provided by the second vehicle 22.

Consequently, in both alternatives the safe braking distance SD may be estimated based on the vehicle type information and/or the vehicle model information.

In order to do so, typical safe braking distances SD for different speed ranges may be stored on the data storage unit 28 as a function of a vehicle type information. Thus, once the vehicle type information is known, a corresponding safe braking distance SD may be determined.

The same applies in case a vehicle model information is known. In this case, specific safe braking distances SD for different speed ranges may be stored on the data storage unit 28 as a function of the vehicle model information. Consequently for each vehicle model information, a corresponding safe braking distance SD may be determined.

As an alternative to the length or distance domain, the collision risk may be determined in the time domain.

In this context, a time to collision TTC between the first vehicle 16 and the second vehicle 22 is estimated.

A collision risk is considered to be existing if the time to collision TTC is inferior to a predefined time to collision threshold TT. The time to collision threshold TT may be a function of the speed of the first vehicle 16.

The calculation of the estimated time to collision TTC may be based on the same measures that have been explained in connection with the determination of the collision risk in the distance domain. The same is true for the calculation of the time to collision threshold TT. This means that the time to collision threshold TT may be determined based on a vehicle type information and/or a vehicle model information.

Optionally, a driver distraction status may be determined.

The driver distraction status may be determined based on the detection results DR. For example, a head pose recognition technique and/or a pupil position detection technique may be performed on the detection result DR. In the present example, in which the detection result DR is an image, a head pose and/or a pupil position of the driver may be determined using a computer vision technique.

The driver distraction status may be used according to two alternatives

In a first alternative, it is assumed that a collision risk is present if the driver is distracted. The driver is considered to be distracted if no pupil position can be detected or if the head pose differs from a pose looking straight ahead.

Thus, in this alternative neither a time to collision TTC nor a distance D between the first vehicle 16 and the second vehicle 22 are determined.

In a second alternative, the driver distraction status is considered when determining the safe braking distance SB and/or the time to collision threshold TT. This means that the driver distraction status is considered when determining the collision risk in the distance domain or in the time domain.

This may be done in that the safe braking distance SD is increased by a distraction supplement if the driver is found to be distracted. The distraction supplement may be a function of the current speed of the first vehicle 16. It may correspond to a distance that is traveled at this speed during a duration of a typical distraction.

In case the collision risk is determined in the time domain, a distraction margin may be subtracted from the time to collision threshold TT. In this alternative, the distraction margin may correspond to a duration of a typical distraction.

If a collision risk has been determined, in a fifth step S5, a collision mitigation maneuver of the first vehicle 16 is triggered. This means that the data processing apparatus 24 sends out a request to perform a collision mitigation maneuver.

In this context, a predefined collision mitigation maneuver may be selected out of the plurality of relatable collision mitigation maneuvers. This may be done based on the planned traveling route 18 and/or a current traffic situation.

In the present example, the collision mitigation maneuver relates to a lane change. This is illustrated by arrow LC in Figure 2.

Thus, in the present example, the first vehicle 16 deviates from the planned route 18 in order to avoid a rear-end collision.

It is noted that this is just an example. In another example, the collision mitigation maneuver of the first vehicle 16 could have consisted in accelerating and following the planned route at a speed which is higher than originally planned.

In a further example, the collision mitigation maneuver of the first vehicle 16 could have consisted in accelerating and continuing to drive on the first road without making the turn into the second road 12.

In all of the above examples, a rear-end collision between the first vehicle 16 and the second vehicle 22 is reliably avoided.

It is noted that in an optional sixth step S6, a collision risk forecast is determined in case no collision risk has been determined.

If the collision risk is determined in the distance domain, a timely evolution of the distance D between the first vehicle 16 and the second vehicle 22 may be extrapolated until the distance D between the first vehicle 16 and the second vehicle 22 corresponds to the safe braking distance SD. Based thereon, the collision risk forecast may comprise an estimation of a time or a traveling distance after which a collision risk is to be expected. The same applies if the collision risk is determined and the time domain.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: first road
- 12: second road
- 14: intersection
- 16: first vehicle
- 18: arrow indicating the panned route
- 20: arrow indicating the travelling direction
- 22: second vehicle
- 24: data processing apparatus
- 26: data processing unit
- 28: data storage unit
- 30: computer-readable storage medium
- 32: computer program
- 34: means for carrying out a method for avoiding a rear-end collision between a first vehicle and a second vehicle
- 36: camera unit
- 38: communication unit of the first vehicle
- 40: communication unit of the second vehicle
- 42: driving mode status determination unit
- 44: storage unit

- D: distance between the first vehicle and the second vehicle
- DM: driving mode
- DR: detection result
- LC: lance change
- O: occupant
- S1: first step
- S2: second step
- S3: third step
- S4: fourth step
- S5: fifth step
- S6: sixth step
- SR: driving mode status request
- SD: safe braking distance
- TTC: time to collision
- TT: time to collision threshold
- W: steering wheel

## Claims

1. A method for avoiding a rear-end collision between a first vehicle (16) and a second vehicle (22) being located behind the first vehicle (16) along a travelling direction (20) of the first vehicle (16) and travelling along the same travelling direction (20), the method comprising
- receiving a detection result (DR) comprising a representation of the second vehicle (22),
- determining whether the second vehicle (22) is driving in a manual driving mode,
if it is determined that the second vehicle (22) is driving in a manual driving mode:
- determining a collision risk between the second vehicle (22) and the first vehicle (16), and
- triggering a collision mitigation maneuver of the first vehicle (16), if a collision risk has been determined, wherein the collision mitigation maneuver is a driving maneuver,
if it is determined that the second vehicle (22) is not driving in a manual driving mode:
- abandoning the method.

2. The method of claim 1, wherein determining that the second vehicle (22) is driving in a manual driving mode comprises determining whether an occupant (O) is located in the second vehicle (22).

3. The method of claim 2, further comprising determining a position of the occupant (O) relative to a steering wheel (W) or a standard driver position of the second vehicle (22).

4. The method of any one of the preceding claims, wherein determining that the second vehicle (22) is driving in a manual driving mode comprises providing a driving mode status request (SR) to the second vehicle (22).

5. The method of any one of the preceding claims, further comprising choosing the triggered collision mitigation maneuver out of a plurality of available collision mitigation maneuvers based on a planned travelling route (18) and/or based on a current traffic situation.

6. The method of any one of the preceding claims, further comprising determining whether the second vehicle (22) is decelerating based on the received detection result (DR) (S2).

7. The method of any one of the preceding claims, wherein determining a collision risk comprises determining a distance (D) between the first vehicle (16) and the second vehicle (22) and comparing the distance (D) to an estimated safe braking distance (SD), wherein the safe the braking distance (SD) is the distance that is needed by the second vehicle (22) to break until standstill.

8. The method of any one of the preceding claims, wherein determining a collision risk comprises determining an estimated time to collision (TTC) between the first vehicle (16) and the second vehicle (22).

9. The method of claim 7 or 8, further comprising receiving or determining a vehicle type information and/or a vehicle model information describing the second vehicle (22) and estimating the safe braking distance (SD) and/or a time to collision threshold (TT) based on the vehicle type information and/or the vehicle model information.

10. The method of any one of the preceding claims, further comprising determining a collision risk forecast if no collision risk has been determined (S6).

11. The method of claim 10, further comprising determining a driver distraction status,
wherein the driver distraction status relates to an information whether the driver of the second vehicle (22) is distracted or not.

12. The method of claim 11, wherein determining a driver distraction status comprises determining a driver head pose and/or a driver pupil position.

13. A data processing apparatus (24) comprising means (34) for carrying out the method of any one of the preceding claims.

14. A computer program (32) comprising instructions which, when the computer program (32) is executed by a computer, cause the computer to carry out the method of claims 1 to 12.

15. A computer-readable storage medium (20) comprising instructions which, when executed by a computer, cause the computer to carry out the method of claims 1 to 12.

## Patentansprüche

1. Verfahren zum Vermeiden eines Auffahrunfalls zwischen einem ersten Fahrzeug (16) und einem zweiten Fahrzeug (22), das sich hinter dem ersten Fahrzeug (16) entlang einer Fahrtrichtung (20) des ersten Fahrzeugs (16) befindet und entlang derselben Fahrtrichtung (20) fährt, wobei das Verfahren umfasst:
- Empfangen eines Detektionsergebnisses (Detection Result, DR), das eine Darstellung des zweiten Fahrzeugs (22) umfasst,
- Bestimmen, ob das zweite Fahrzeug (22) in einem manuellen Fahrmodus fährt,
falls bestimmt wird, dass das zweite Fahrzeug (22) in einem manuellen Fahrmodus fährt:
- Bestimmen eines Kollisionsrisikos zwischen dem zweiten Fahrzeug (22) und dem ersten Fahrzeug (16), und
- Auslösen eines Kollisionsminderungsmanövers des ersten Fahrzeugs (16), falls ein Kollisionsrisiko bestimmt wurde, wobei das Kollisionsminderungsmanöver ein Fahrmanöver ist,
falls bestimmt wird, dass das zweite Fahrzeug (22) nicht in einem manuellen Fahrmodus fährt:
- Abbrechen des Verfahrens.

2. Verfahren nach Anspruch 1, wobei das Bestimmen, dass das zweite Fahrzeug (22) in einem manuellen Fahrmodus fährt, das Bestimmen umfasst, ob sich ein Insasse (O) in dem zweiten Fahrzeug (22) befindet.

3. Verfahren nach Anspruch 2, umfassend des Weiteren das Bestimmen einer Position des Insassen (O) relativ zu einem Lenkrad (W) oder einer Standardfahrerposition des zweiten Fahrzeugs (22).

4. Verfahren nach einem der vorangehenden Ansprüche, wobei das Bestimmen, dass das zweite Fahrzeug (22) in einem manuellen Fahrmodus fährt, das Übermitteln einer Fahrmodus-Statusabfrage (Status Request, SR) an das zweite Fahrzeug (22) umfasst.

5. Verfahren nach einem der vorangehenden Ansprüche, umfassend des Weiteren das Auswählen des ausgelösten Kollisionsminderungsmanövers aus mehreren verfügbaren Kollisionsminderungsmanövern auf der Grundlage einer geplanten Fahrroute (18) und/oder auf der Grundlage einer momentanen Verkehrssituation.

6. Verfahren nach einem der vorangehenden Ansprüche, umfassend des Weiteren das Bestimmen, ob das zweite Fahrzeug (22) verlangsamt, auf der Grundlage des empfangenen Detektionsergebnisses (DR) umfsst (S2).

7. Verfahren nach einem der vorangehenden Ansprüche, wobei das Bestimmen eines Kollisionsrisikos das Bestimmen einer Distanz (D) zwischen dem ersten Fahrzeug (16) und dem zweiten Fahrzeug (22) und das Vergleichen der Distanz (D) mit einem geschätzten sicheren Bremsweg (Safe braking Distance, SD) umfasst, wobei der sichere Bremsweg (SD) die Distanz ist, die das zweite Fahrzeug (22) für ein Abbremsen bis zum Stillstand benötigt.

8. Verfahren nach einem der vorangehenden Ansprüche, wobei das Bestimmen eines Kollisionsrisikos das Bestimmen einer geschätzten Zeit bis zur Kollision (Time To Collision, TTC) zwischen dem ersten Fahrzeug (16) und dem zweiten Fahrzeug (22) umfasst.

9. Verfahren nach Anspruch 7 oder 8, umfassend des Weiteren das Empfangen oder Bestimmen einer Fahrzeugtypinformation und/oder einer Fahrzeugmodellinformation, die das zweite Fahrzeug (22) beschreiben, und das Schätzen des sicheren Bremsweges (SD) und/oder einer Zeit-bis-zur-Kollision-Schwelle (Time to collision Threshold, TT) auf der Grundlage der Fahrzeugtypinformation und/oder der Fahrzeugmodellinformation.

10. Verfahren nach einem der vorangehenden Ansprüche, umfassend des Weiteren das Bestimmen einer Kollisionsrisikovorhersage, falls kein Kollisionsrisiko bestimmt wurde (S6).

11. Verfahren nach Anspruch 10, umfassend des Weiteren das Bestimmen eines Fahrerablenkungsstatus, wobei sich der Fahrerablenkungsstatus auf eine Information darüber bezieht, ob der Fahrer des zweiten Fahrzeugs (22) abgelenkt ist oder nicht.

12. Verfahren nach Anspruch 11, wobei das Bestimmen eines Fahrerablenkungsstatus das Bestimmen einer Kopfhaltung des Fahrers und/oder einer Pupillenposition des Fahrers umfasst.

13. Datenverarbeitungsvorrichtung (24), umfassend ein Mittel (34) zum Ausführen des Verfahrens nach einem der vorangehenden Ansprüche.

14. Computerprogramm (32), umfassend Instruktionen, die, wenn das Computerprogramm (32) durch einen Computer ausgeführt wird, den Computer veranlassen, das Verfahren nach den Ansprüchen 1 bis 12 auszuführen.

15. Computerlesbares Speichermedium (20), umfassend Instruktionen, die, wenn sie durch einen Computer ausgeführt werden, den Computer veranlassen, das Verfahren nach den Ansprüchen 1 bis 12 auszuführen.

## Revendications

1. Procédé pour éviter une collision par l'arrière entre un premier véhicule (16) et un second véhicule (22) qui est situé derrière le premier véhicule (16) le long d'une direction de déplacement (20) du premier véhicule (16) et se déplaçant le long de la même direction de déplacement (20), le procédé comprenant de :
- recevoir un résultat de détection (Detection Result, DR) comprenant une représentation du second véhicule (22),
- déterminer si le second véhicule (22) est conduit dans un mode de conduite manuel,
s'il est déterminé que le second véhicule (22) est conduit dans un mode de conduite manuel :
- déterminer un risque de collision entre le second véhicule (22) et le premier véhicule (16), et
- déclencher une manœuvre d'anticipation de collision du premier véhicule (16), si un risque de collision a été déterminé, dans lequel la manœuvre d'anticipation de collision est une manœuvre de conduite,
s'il est déterminé que le second véhicule (22) n'est pas conduit dans un mode de conduite manuel :
- abandonner le procédé.

2. Procédé selon la revendication 1, dans lequel la détermination que le second véhicule (22) est conduit dans un mode de conduite manuel comprend de déterminer si un occupant (O) est situé dans le second véhicule (22).

3. Procédé selon la revendication 2, comprenant en outre de déterminer une position de l'occupant (O) par rapport à un volant de direction (W) ou une position de conducteur standard du second véhicule (22).

4. Procédé selon l'une quelconque des revendications précédentes, dans lequel la détermination que le second véhicule (22) est conduit dans un mode de conduite manuel comprend de fournir une requête d'état (Status Request, SR) de mode de conduite au second véhicule (22).

5. Procédé selon l'une quelconque des revendications précédentes, comprenant en outre de choisir la manœuvre d'anticipation de coalition déclenchée parmi une pluralité de manœuvres d'anticipation de collision disponibles sur la base d'un trajet de déplacement planifié (18) et/ou sur la base d'une situation de trafic actuelle.

6. Procédé selon l'une quelconque des revendications précédentes, comprenant en outre de déterminer si le second véhicule (22) est en cours de décélération sur la base du résultat de détection (DR) reçu (S2).

7. Procédé selon l'une quelconque des revendications précédentes, dans lequel la détermination d'un risque de collision comprend de déterminer une distance (D) entre le premier véhicule (16) et le second véhicule (22) et de comparer la distance (D) à une distance estimée de freinage de sécurité (Safe braking Distance, SD), dans lequel la distance de freinage de sécurité (SD) est la distance qui est nécessaire au second véhicule (22) pour freiner jusqu'à l'arrêt.

8. Procédé selon l'une quelconque des revendications précédentes, dans lequel la détermination d'un risque de collision comprend de déterminer un temps estimé restant avant une collision (Time To Collision, TTC) entre le premier véhicule (16) et le second véhicule (22).

9. Procédé selon la revendication 7 ou 8, comprenant en outre de recevoir ou de déterminer une information de type de véhicule et/ou une information de modèle de véhicule décrivant le second véhicule (22) et d'estimer la distance de freinage de sécurité (SD) et/ou un seuil de temps restant avant une collision (Time to collision Threshold, TT) sur la base de l'information de type de véhicule et/ou de l'information de modèle de véhicule.

10. Procédé selon l'une quelconque des revendications précédentes, comprenant en outre de déterminer une prévision de risque de collision si aucun risque de collision n'a été déterminé (S6).

11. Procédé selon la revendication 10, comprenant en outre de déterminer un état de distraction du conducteur, dans lequel l'état de distraction du conducteur se rapporte à une information indiquant si le conducteur du second véhicule (22) est distrait ou non.

12. Procédé selon la revendication 11, dans lequel la détermination d'un état de distraction du conducteur comprend de déterminer une posture de tête du conducteur et/ou une position de pupille du conducteur.

13. Appareil de traitement de données (24) comprenant des moyens (34) pour mettre en œuvre le procédé de l'une quelconque des revendications précédentes.

14. Programme informatique (32) comprenant des instructions qui, lorsque le programme informatique (32) est exécuté par un ordinateur, amènent l'ordinateur à mettre en œuvre le procédé des revendications 1 à 12.

15. Support de stockage lisible par ordinateur (20) comprenant des instructions qui, lorsqu'elles sont exécutées par un ordinateur, amènent l'ordinateur à mettre en œuvre le procédé des revendications 1 à 12.
